# EUROPÄISCHE PATENTSCHRIFT

(11) **EP 1 985 349 B1**
(45) Veröffentlichungstag und Bekanntmachung des Hinweises auf die Patenterteilung: **14.12.2011**
(21) Anmeldenummer: 08007644.1
(22) Anmeldetag: 18.04.2008
(51) Int. Cl.: B01D 39/16

(54) **Filterelement mit Klebstoffschicht und Verfahren zur Herstellung desselben**
Filter element with adhesive layer and method for production of same
Elément de filtre doté d'une couche de matière adhésive et son procédé de fabrication

(30) Priorität: 21.04.2007 DE 102007018939
(43) Veröffentlichungstag der Anmeldung: 29.10.2008
(73) Patentinhaber: MANN+HUMMEL Innenraumfilter GmbH & Co. KG, 95482 Gefrees (DE)
(72) Erfinder: Seitz, Marcus Dr., 95473 Creussen (DE)
(74) Vertreter: LOUIS, PÖHLAU, LOHRENTZ

(56) Entgegenhaltungen:
- EP-A- 1 378 283
- DE-A1- 19 922 326
- DE-A1-102005 053 915
- US-A- 5 728 299
- US-B1- 6 749 753

## Beschreibung

Die vorliegende Erfindung betrifft ein Filterelement, umfassend eine erste Faserschicht, eine zweite Faserschicht, welche durch eine Klebstoffschicht aus Schmelzkleberfasern oder aus Klebstoffpunkten verbunden sind und ein Verfahren zur Herstellung eines derartigen Filterelements.

Das Filterelement kann als Filter, insbesondere in Kraftfahrzeugen, verwendet werden.

Die Faserschichten, insbesondere mit größeren Flächengewichtsauflagen, neigen dazu, sich von benachbarten Schichten zu delaminieren. Im Stand der Technik werden deshalb Verfahren beschrieben, um die Faserschichten an benachbarten Schichten zu fixieren. Beispielsweise können die Schichten selbstklebende Eigenschaften aufweisen (US 4,650,506). Ferner können die einzelnen Schichten mit einer durchgehenden Kleberschicht verbunden werden, wobei beispielsweise Schmelzkleber oder Reaktivkleber eingesetzt werden können.

Die EP1378283 A1 offenbart eine Vliesware für einen Filter.

Die im Stand der Technik bekannten Verbundfilter haben entweder negative Auswirkungen auf den Druckabfall, wenn der Filter durchströmt wird, oder sie sind verfahrenstechnisch sehr aufwendig herzustellen.

Aufgabe der vorliegenden Erfindung ist es daher, ein Filterelement bereitzustellen, dessen Faserschichten miteinander fixiert bzw. verhaftet sind und das nur eine geringe Beeinträchtigung der Luftdurchlässigkeit bzw. keinen signifikanten Druckabfall hervorruft.

Eine weitere Aufgabe ist es, ein Verfahren zur Herstellung von Filterelementen bereitzustellen, deren Faserschichten mittels einer Klebstoffschicht verbunden sind und das verfahrenstechnisch einfach durchzuführen ist.

Die Aufgabe wird durch Bereitstellung eines Filterelements gelöst, umfassend eine erste Faserschicht, eine zweite Faserschicht und eine Klebstoffschicht, welche die erste und die zweite Faserschicht verbindet, wobei die Klebstoffschicht Schmelzkleberfasern mit einem Faserdurchmesser in einem Bereich von 1 nm bis 500 nm, vorzugsweise von 100 bis 400 nm, weiter bevorzugt 100 bis 250 nm, umfasst oder daraus besteht, wobei die Schmelzkleberfasern einen Schmelzpunkt aufweisen, der mindestens 30 °C, vorzugsweise mindestens 80°C, unter dem Schmelzpunkt der ersten und der zweiten Faserschicht liegt. Vorzugsweise weisen die Schmelzkleberfasern einen Schmelzpunkt auf, der mindestens 100°C unter dem Schmelzpunkt der ersten und der zweiten Faserschicht liegt.

Bei einer Ausführungsform bestehen mindestens 50 Gew.-%, vorzugsweise mindestens 90 Gew.-%, der Schmelzkleberfasern, bezogen auf das Gesamtgewicht der Schmelzkleberfasern des erfindungsgemäßen Filterelementes, aus Schmelzkleberfasern mit einem Faserdurchmesser in einem Bereich von 1 nm bis 500 nm, vorzugsweise von 100 bis 400 nm, weiter bevorzugt 100 bis 250 nm.

Ferner wird die Aufgabe durch ein Filterelement gelöst, umfassend eine erste Faserschicht , eine zweite Faserschicht und eine Klebstoffschicht, welche die erste mit der zweiten Faserschicht verbindet, wobei die Klebstoffschicht Schmelzkleberpunkte mit einer Größe von 10 bis 800 nm, vorzugsweise von 100 bis 400 nm, weiter bevorzugt 200 bis 300 nm, umfasst oder daraus besteht und die Schmelzkleberpunkte einen Schmelzpunkt aufweisen, der mindestens 30 °C, vorzugsweise mindestens 80°C, unter dem Schmelzpunkt der ersten und der zweiten Faserschicht liegt. Vorzugsweise weisen die Schmelzkleberpunkte einen Schmelzpunkt auf, der mindestens 100°C unter dem Schmelzpunkt der ersten und der zweiten Faserschicht liegt.

Bei einer Ausführungsform bestehen mindestens 50 Gew.-%, vorzugsweise mindestens 90 Gew.-%, der Schmelzkleberschicht, bezogen auf das Gesamtgewicht der Schmelzkleberschicht des erfindungsgemäßen Filterelementes, aus Schmelzkleberpunkten mit einer Größe von 10 bis 800 nm, vorzugsweise von 100 bis 400 nm.

Das erfindungsgemäße Filterelement zeichnet sich durch eine gute Haftung der durch die Klebstoffschicht verbundenen Faserschichten aus. Ferner hat die Klebstoffschicht des erfindungsgemäßen Filterelements nur einen geringen Einfluss auf den Druckabfall beim Durchströmen des Filters.

Im Gegensatz hierzu erzeugen die im Stand der Technik verwendeten durchgehenden Klebstoffschichten einen signifikanten Druckabfall.

Weitere bevorzugte Ausführungsformen des erfindungsgemäßen Filterelements sind in den Unteransprüchen 3 bis 7 angegeben.

Bei einer Ausführungsform beträgt das Flächengewichtsauflage der Klebstoffschicht 0,05 bis 5 g/m², vorzugsweise 1,0 bis 2 g/m².

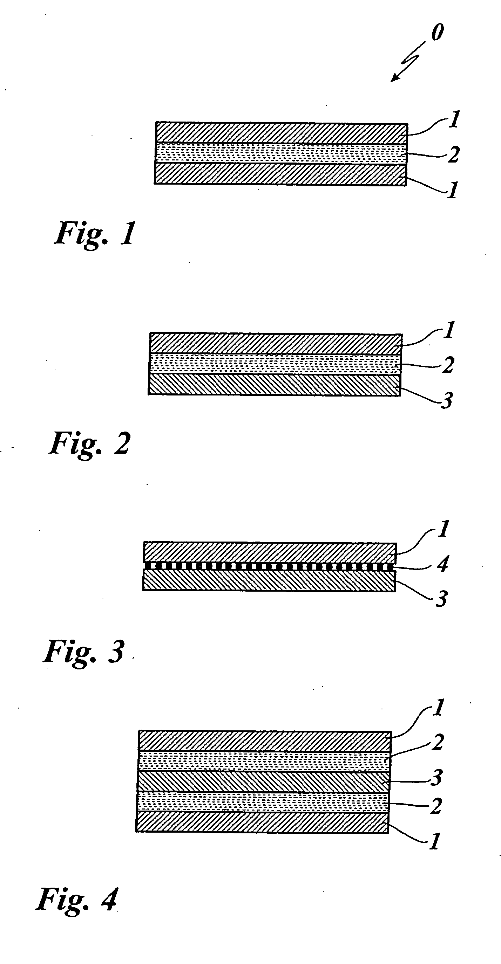

Bei einer Ausführungsform des erfindungsgemäßen Filterelementes ist
(i) die erste und die zweite Faserschicht ein Trägermaterial (Figur 1) oder
(ii) die erste Faserschicht ist ein Trägermaterial und die zweite Faserschicht ist eine funktionelle Faserschicht (Figur 2 und 3) oder
(iii) die erste Faserschicht ist eine funktionelle Faserschicht und die zweite Faserschicht ist ein Trägermaterial oder
(iv) die erste Faserschicht ist ein Trägermaterial und die zweite Faserschicht ist eine funktionelle Faserschicht , auf welcher eine weitere Klebstoffschicht aus Schmelzkleberfasern oder Schmelzkleberpunkten angeordnet ist,
wobei die erste und zweite Faserschicht durch eine Schmelzkleberschicht aus Schmelzkleberfasern und/oder Schmelzkleberpunkten verbunden sind.

Unter Schmelzkleberpunkten im Sinne der Erfindung sind insbesondere regelmäßig oder unregelmäßig geformte Kreise, beispielsweise Klekse, zu verstehen.

Die aufgebrachte Klebstoffschicht mit Schmelzkleberfasern fixiert die Faserschichten miteinander. Durch das Aufschmelzen der Schmelzkleberfasern wird ein verbesserter Verbund der ersten und zweiten Faserschicht, beispielsweise von funktioneller Faserschicht und Trägermaterial, erreicht.

Unter Trägerschicht sind vorzugsweise Schichten zu verstehen, die der Stabilisierung des Filterelements dienen. Unter funktioneller Faserschicht sind vorzugsweise Schichten zu verstehen, die dem Filterelement Filter- und/oder Adsorptionseigenschaften verleihen. Vorzugsweise weist die funktionelle Faserschicht Fasern mit einem Durchmesser in einem Bereich von 1 bis 800 nm auf.und/oder die Trägerschicht weist vorzugsweise Fasern mit einem Durchmesser in einem Bereich von 1 bis 50 µm auf.

Vorzugsweise sind die Schmelzkleberfasern der Klebstoffschicht in einem Elektrospinnverfahren hergestellt.

Die erfindungsgemäßen Filterelemente sind über die Flächen der Faserschichten, die jeweils eine Ebene definieren, durch eine Klebstoffschicht aus Schmelzkleberfasern und/oder durch eine Klebstoffschicht aus Schmelzkleberpunkten miteinander verbunden.

Das erfindungsgemäße Filterelement kann auch als Verbundfilter bezeichnet werden, der mehrere Lagen enthält. Bei einer Ausführungsform weist das erfindungsgemäße Filterelement 2, 3, 4 oder weitere Faserschichten auf, die jeweils über eine Klebstoffschicht aus Schmelzkleberfasern und/oder Schmelzkleberpunkten verbunden sind.

Bei einer Ausführungsform des erfindungsgemäßen Filterelements weist die Klebstoffschicht einen Schmelzpunkt in einem Bereich von 40°C bis 120 °C, vorzugsweise von 40°C bis 90°C, auf.

Unter Schmelzkleberfasern im Sinne der Erfindung sind Fasern aus bei Raumtemperatur, d.h. bei 25°C, festen, vorzugsweise wasser- und lösungsmittelfreien Klebstoffen zu verstehen. Diese werden üblicherweise bei erhöhten Temperaturen, d.h. bei über 50°C, auf miteinander zu verklebende Gegenstände aus der Schmelze aufgetragen und härten nach dem Zusammenfügen beim Abkühlen auf Raumtemperatur unter Verfestigung, vorzugsweise ohne eine chemische Reaktion. Vorzugsweise weisen Schmelzkleberfäden im Sinne der Erfindung im ungeschmolzenen Zustand keine Klebrigkeit auf und weisen im geschmolzenen Zustand eine Klebrigkeit auf.

Die Schmelzkleberfasern ziehen sich nach dem Erwärmen zu einzelnen Punkten zusammen und bilden keine durchgehende Schmelzkleberfaserschicht. Vorzugsweise weisen die Schmelzkleberfasern im Sinne der Erfindung im ungeschmolzenen Zustand keine Klebrigkeit auf und weisen im geschmolzenen Zustand eine Klebrigkeit auf. Bei einer Ausführungsform des erfindungsgemäßen Filterelements weisen die Schmelzkleberfasern und/oder Schmelzkleberpunkte Adsorberpartikel auf.

Die Haftung zwischen den verschiedenen Schichten entsteht durch Zwickelbildung ähnlich wie beim Klettverschluss, d.h. der Schmelzkleber umschließt stellenweise die Fasern der einen Schicht und dringt verästelungsartig in die Fasern der zweiten Schicht ein.

Unter Adsorberpartikel im Sinne der vorliegenden Erfindung sind pulver- und/oder granulatförmige Partikel mit Adsorbereigenschaften zu verstehen, wie beispielsweise Zeolithe, Silikagele, Aktivkohle, Aluminiumoxid, Calciumchlorid und/oder Mischungen davon.

Bei einer Ausführungsform des erfindungsgemäßen Filterelementes sind die Materialien der Schmelzkleberfasern aus der Gruppe, bestehend aus Polyolefinen, Polylactiden, Polyestern, Polyurethanen, Polystyrolen, Polyamide und Kombinationen davon, ausgewählt.

Bei einer Ausführungsform des erfindungsgemäßen Verfahrens ist die erste und/oder zweite Faserschicht eine Trägerschicht. Bei einer Ausführungsform des erfindungsgemäßen Verfahrens ist die erste und/oder zweite Faserschicht eine funktionelle Faserschicht.

Die Trägerschicht weist vorzugsweise Fasern mit einem Durchmesser in einem Bereich von 1 bis 50 µm, weiter bevorzugt in einem Bereich von 10 bis 30 µm, auf.

Bei einer Ausführungsform weist die Trägerschicht eine Flächengewichtsauflage von 5 bis 50 g/m², vorzugsweise 10 bis 30 g/m², auf.

Die funktionelle Faserschicht weist vorzugsweise Fasern mit einem Durchmesser in einem Bereich von 1 bis 800 nm, weiter bevorzugt in einem Bereich von 50 bis 500 nm auf. Das Flächengewicht der funktionellen Faserschicht beträgt vorzugsweise 0,05 bis 5 g/m², weiter bevorzugt 1,0 bis 2,0 g/m². Vorzugsweise weist die funktionelle Faserschicht eine elektrische Ladung auf. Die funktionelle Faserschicht wirkt vorzugsweise als Partikelfilter.

Bei einer Ausführungsform des erfindungsgemäßen Filterelements ist die Trägerschicht und/oder die funktionelle Faserschicht aus einem Vlies aus Polyester, Polyolefin, Polycarbonat, Polyurethan, Polylactid-, Polystyrol-, Polyamidbasis, aus retikuliertem PUR-Schaum und/oder Mischungen davon gebildet.

Bei einer Ausführungsform des erfindungsgemäßen Filterelementes verbindet die Klebstoffschicht aus Schmelzkleberfasern die erste Faserschicht mit der zweiten Faserschicht und/oder verbindet weitere Faserschichten miteinander, vorzugsweise liegt aber keine chemische Vernetzung zwischen Klebstoffschicht und Faserschicht vor.

Bei einer weiteren Ausführungsform des erfindungsgemäßen Filterelementes wird eine weitere Klebstoffschicht aus Schmelzkleberfasern und/oder Schmelzkleberpunkten und anschließend eine weitere funktionelle Faserschicht und/oder Trägerschicht auf die zweite Faserschicht aufgebracht (Figur 4). Die weitere Klebstoffschicht aus Schmelzkleberfasern und/oder Schmelzkleberpunkten und/oder die weitere funktionelle Faserschicht können gleiche oder verschiedenen Materialien wie die zuvor aufgebrachte Klebstoffschicht und/oder Faserschicht aufweisen. Die weitere Klebstoffschicht umfasst vorzugsweise Schmelzkleberfasern mit einem Faserdurchmesser in einem Bereich von 1 nm bis 500 nm und/oder Schmelzkleberpunkte mit einer Größe von 10 nm bis 800 nm. Bevorzugte Ausführungsformen der weiteren Klebstoffschicht entsprechen vorzugsweise der Ausgestaltung der vorstehenden Klebstoffschicht.

Unter einer funktionellen Faserschicht im Sinne der vorliegenden Erfindung ist vorzugsweise eine Faserschicht zu verstehen, deren Faserquerschnitte im nm-Bereich, vorzugsweise in einem Bereich von 1 nm bis 800 nm, weiter bevorzugt in einem Bereich von 100 bis 300 nm, liegen. Eine funktionelle Faserschicht weist Adsorptionseigenschaften auf.

Bei einer Ausführungsform des erfindungsgemäßen Filterelementes weisen die Schmelzkleberfasern einen Schmelzpunkt auf, der mindestens 80 °C, vorzugsweise mindestens 100 °C unter dem Schmelzpunkt der Fasern der ersten und der zweiten Faserschicht liegt.

Bei einer Ausführungsform des erfindungsgemäßen Filterelementes besteht die Klebstoffschicht aus Schmelzkleberpunkten mit einer Größe von 100 bis 400 nm.

Unter Trägermaterial im Sinne der Erfindung ist vorzugsweise eine Faserschicht mit Fasern mit einem Faserdurchmesser im µm-Bereich, vorzugsweise in einem Bereich von 1 µm bis 500 µm, zu verstehen. Das Trägermaterial weist keine oder nur geringe Filtereigenschaften auf.

Bei einer Ausführungsform des erfindungsgemäßen Filterelementes umfasst die Klebstoffschicht aus Schmelzkleberfasern oder Schmelzkleberpunkten Ladungsträger. Unter Ladungsträgern im Sinne der vorliegenden Erfindung sind Substanzen zu verstehen, die eine Ladung tragen, ionisierbar sind, eine Partialladung tragen und/oder über Dipole verfügen, die sich im elektrischen Feld ausrichten lassen. Zu Beginn der Benutzung eines solchen Filter ist die Abscheidewirkung vorzugsweise auf die elektrostatischen Eigenschaften der Fasern zurückzuführen. Nach längerer Standzeit (Betriebszeit) bilden die abgeschiedenen Partikel einen Filterkuchen. Ab diesem Zeitpunkt ist die Abscheidewirkung vorzugsweise auf Ablagerungen von Verunreinigungen in den Hohlräumen des Filters zurückzuführen.

Als Ladungsträger können beispielsweise organische und/oder anorganische Salze und/oder Stoffe, welche verschiebbare Ladungen, z.B ein Π-Elektronensystem, enthalten oder polare Substanzen verwendet werden, die sich im elektrischen Feld ausrichten.

Ferner wird die Aufgabe durch ein Verfahren zur Herstellung eines Filterelements gelöst, umfassend die folgenden Schritte in der angegebenen Reihenfolge:
a) Bereitstellen einer ersten Faserschicht ,
b) Aufbringen einer Klebstoffschicht , die Schmelzkleberfasern mit einem Faserdurchmesser in einem Bereich von 1 nm bis 500 nm umfasst oder daraus besteht, auf die erste Faserschicht aus Schritt a),
c) Aufbringen einer zweiten Faserschicht auf die Klebstoffschicht nach Schritt b), wobei die Schmelzkleberfasern einen Schmelzpunkt aufweisen, der mindestens 30 °C unter dem Schmelzpunkt der Fasern der ersten und der zweiten Faserschicht liegt.

Weitere Ausführungsformen des erfindungsgemäßen Verfahrens sind in den Unteransprüchen 8 bis 17 angegeben.

Durch das erfindungsgemäße Verfahren können die Schmelzkleberpunkte feiner verteilt werden und weniger Klebstoff auf die Fasern aufgebracht werden. Jeder Klebepunkt bewirkt an der Klebestelle eine Inaktivierung der Filterwirkung der Faser, da die Faser punktuell mit Klebstoff überzogen ist. Wird der Klebstoff feiner verteilt oder weniger Klebstoff aufgebracht, ist die Gesamtfilterwirkung höher, da weniger Fasern inaktiviert werden.

Bei einer Ausführungsform des erfindungsgemäßen Verfahrens wird nach Schritt c) das Filterelement auf eine Temperatur erwärmt, die über dem Schmelzpunkt der Klebstoffschicht aus Schmelzkleberfasern aber unter dem Schmelzpunkt der ersten und zweiten Faserschicht liegt unter Ausbildung einer Klebstoffschicht aus Schmelzkleberpunkten mit einer Größe von 10 bis 800 nm.

Beim Erwärmen der Klebstoffschicht schmelzen die Schmelzkleberfasern auf und ziehen sich zu einzelnen Punkten zusammen.

Die für das erfindungsgemäße Filterelement beschriebenen Zusammensetzungen und Anordnungen der Schichten können auch bei dem erfindungsgemäßen Verfahren eingesetzt werden.

Bei einer Ausführungsform des erfindungsgemäßen Verfahrens ist die erste und die zweite Faserschicht ein Trägermaterial.

Bei einer Ausführungsform des erfindungsgemäßen Verfahrens ist:
i) die erste Faserschicht ein Trägermaterial und die zweite Faserschicht eine funktionelle Faserschicht oder
ii) die erste Faserschicht ist eine funktionelle Faserschicht und die zweite Faserschicht ist ein Trägermaterial.
Bei einer Ausführungsform wird auf beiden Seiten der funktionellen Faserschicht eine Klebstoffschicht aus Schmelzkleberfasern aufgebracht.

Bei einer weiteren Ausführungsform des erfindungsgemäßen Verfahrens ist in Schritt a) die erste Faserschicht eine Trägerschicht und in Schritt c) die zweite Faserschicht eine funktionelle Faserschicht mit einem hohen Flächengewicht von mehr als 1g/m². Vorzugsweise weist die funktionelle Faserschicht mit einem hohen Flächengewicht ein Flächengewicht in einem Bereich von 1g/m² bis 5 g/m² auf.

Bei einer anderen Ausführungsform des erfindungsgemäßen Verfahrens ist in Schritt a) die erste Faserschicht eine funktionelle Faserschicht mit einem niedrigen Flächengewicht von weniger als 0,5 g/m², vorzugsweise weniger als 0,1 g/m², und in Schritt c) die zweite Faserschicht eine Trägerschicht. Vorzugsweise weist die funktionelle Faserschicht mit einem niedrigen Flächengewicht ein Flächengewicht in einem Bereich von 0,05 g/m² bis 0,1 g/m² auf.

Bei einer Ausführungsform des erfindungsgemäßen Verfahrens wird nach Schritt c), der Schritt b) und c) jeweils einmal oder mehrmals wiederholt. Hierfür können gleiche oder unterschiedliche Materialien wie bei der ersten Durchführung des Schrittes b) und/oder c) verwendet werden.

Bei einer Ausführungsform des erfindungsgemäßen Verfahrens erfolgt das Erwärmen der Schmelzkleberschicht aus Schmelzkleberfasern durch Bügeln, beheizte Walzen, beheizte Kontaktplatten, IR-Strahlung, und/oder Warmluft.

Bei einer Ausführungsform des erfindungsgemäßen Verfahrens umfasst die Klebstoffschicht aus Schmelzkleberfasern und/oder Schmelzkleberpunkten Ladungsstabilisatoren.

Bei einer bevorzugten Ausführungsform des erfindungsgemäßen Verfahrens wird die Schmelzkleberfaserschicht durch Elektrospinnen hergestellt. Ein derartiges Elektrospinnverfahren ist beispielsweise in der DE 2328015 A1 beschrieben, welches unter Bezugnahme aufgenommen ist.

Die vorliegende Erfindung betrifft ferner die Verwendung des erfindungsgemäßen Filterelements als Kabinenluftfilter, Umluftfilter, Reinraumfilter, Abluftfilter, Wohnraumfilter und/oder Staubsaugerfilter.

Bei einer anderen Ausführungsform ist die Trägerschicht und/oder funktionelle Faserschicht aus Fasern hergestellt, die einen Schmelzpunkt von mindestens 160 °C, vorzugsweise von mindestens 200 °C, aufweisen.

Bei einer Ausführungsform sind die Fasern der Klebstoffschicht aus thermoplastischem Polyurethan (TPU) hergestellt, welches bei unter 85 °C schmilzt. Ferner können Polymere auf der Basis von Polyolefinen, Polyamiden und/oder Polyestern verwendet werden.

Durch die nachfolgenden Beispiele soll die vorliegende Erfindung näher erläutert, aber in keiner Weise beschränkt werden.

Figuren
Figur 1 zeigt ein Filterelement aus 2 Trägerschichten (1), die über eine Schmelzkleberfaserschicht (2) verbunden sind.
Figur 2 zeigt ein Filterelement aus 1 Trägerschicht (1) und einer funktionellen Faserschicht (3), die über eine Schmelzkleberfaserschicht (2) verbunden sind
Figur 3 zeigt ein Filterelement aus 1 Trägerschicht (1) und einer funktionellen Faserschicht (3), die über Klebstoffschicht aus Schmelzkleberpunkten (4) verbunden sind.
Figur 4 zeigt ein Filterelement aus einer Trägerschicht (1), einer Schmelzkleberfaserschicht (2), einer funktionellen Faserschicht (3), einer Schmelzkleberfaserschicht (2) und einer Trägerschicht (1)(Beispiel 2c).

### Bezugszeichenliste

- 0: Filterelement
- 1: Faserschicht aus Trägermaterial
- 2: Schmelzkleberfaserschicht
- 3: funktionelle Faserschicht
- 4: Klebstoffschicht aus geschmolzenen Schmelzkleberpunkten

### Beispiele

### Beispiel 1

Ein Stanzling aus einem Polyesterträgervlies (15 g/m² Flächengewichtsauflage) wurde ein- (Vergleichsbeispiel 1 a) und zweilagig (Vergleichsbeispiel 1b)auf Druckabfall und Abscheideleistung geprüft. Des weiteren wurden zweilagige Polyesterträgervliese überprüft, die über eine Schmelzkleberfaserschicht verbunden wurden (Beispiel 1d). In diesem erfindungsgemäßen Ausführungsbeispiel wurde eine Lage des Polyestervlieses mit 250 mg/m² Schmelzklebernanofaser beschichtet, eine weitere Lage des Polyesterträgervlieses darüber angeordnet und die Schichten mit einer temperierten Walze bei 80 °C verpresst.

Als Vergleichsbeispiel 1 c wurden nach dem gleichen Verfahren zwei Lagen mit Hilfe von 2 g/m² Pulverkleber aus Polyamidschmelzklebstoff laminiert.

Die unten stehende Tabelle zeigt die Resultate der Messungen des Druckabfalls und der Abscheideleistung als Mittelwerte aus 5 Versuchen. Der Druckabfall, der aus der Differenz des gemessenen Drucks vor und hinter dem Filter berechnet wurde, wurde bei einem Volumenstrom aus Umgebungsluft von 110 l/min, der durch eine Fläche von 380 cm² geleitet wurde, gemessen. Die Abscheideleistung wurde bei einem Volumenstrom von 50l/min, der durch eine Fläche von 380 cm² geleitet wurde, und mit NaCl-Partikeln mit 0,3 bis 0,5 µm Partikeldurchmesser gemessen:

**Tabelle 1**

| | **Druckabfall** | **Abscheideleistung NaCl (Partikeldurchmesser 0,3-0,5 µm)** |
|---|---|---|
| Polyesterträgervlies 1-lagig (Stand der Technik) (Vergleichsbeispiel 1a) | 5 Pa | 7 % |
| Polyesterträgervlies 2-lagig nicht laminiert (Stand der Technik) (Vergleichsbeispiel 1b) | 20 Pa | 12 % |
| Polyesterträgervlies 2-lagig mit Pulverkleber (Stand der Technik) (Vergleichsbeispiel 1c) | 19 Pa | 18 % |
| Erfindungsgemäßes Polyesterträgervlies 2-lagig mit Schmelzklebernanofaser (Beispiel 1 d) | 15 Pa | 22 % |

Beim Vergleich eines einlagigen und zweilagigen Polyesterträgervlieses wird deutlich, dass sich bei einem zweilagigen Polyesterträgervlies der Druckabfall (20 Pa) gegenüber dem einlagigen Polyesterträgervlies (5 Pa) mehr als verdoppelt. Dies ist darauf zurückzuführen, dass sich durch die schlechte Haftung der Schichten Lufttaschen bilden. Um die Leistung des Filters zu verbessern, war es daher notwendig die beiden Schichten dauerhaft zu verbinden.

Bei der Verwendung eines zweilagigen Polyesterträgervlieses, welches durch einen Pulverkleber laminiert ist, kommt es zu keiner deutlichen Verbesserung des Druckabfalls, da der Pulverkleber die Hohlräume des Polyestervlieses verklebt. Lediglich die Abscheideleistung wird verbessert.

Überraschenderweise ist der Druckabfall bei dem erfindungsgemäßen zweilagigen Polyesterträgervlies, welches über eine Schmelzklebernanofaser laminiert wird, deutlich geringer (15 Pa) als bei mit Pulverklebern laminierten Pulverester-Trägervliesen (19 Pa). Auch die Abscheideleistung wird deutlich verbessert: Die Abscheideleistung bei einem zweilagigen Polyesterträgervlies, welches über eine Schmelzklebernanofaser laminiert wird, beträgt 22 %, während die Abscheideleistung bei mit Pulverklebern laminierten Pulverester-Trägervliesen lediglich 18 % beträgt.

### Beispiel 2

Im Vergleichbeispiel 2a) wurde eine einzelne Polypropylenträgerschicht bereitgestellt.

Im Vergleichsbeispiel 2b) wurde eine Polypropylenträgerschicht mit ca. 150 mg/m² Polystyrolnanofasern beschichtet. Eine Kleberschicht zur Verbindung der beiden Schichten wurde nicht eingefügt. Es wurde eine 5 Gew.-%-ige Lösung Polystyrol in Butanon mit Hilfe einer Spritzenapparatur unter Zusatz von 0,02 Gew.-% Kristallviolett in einem elektrischen Feld von 2 kV/cm bei einer Flußrate von 0,3 ml/min zu feinen Fasern versponnen und auf der Trägerschicht abgelegt. Der mittlere Durchmesser der Fasern lag bei ca. 200 nm.

In dem erfindungsgemäßen Beispiel 2c) wurde eine Polypropylenträgerschicht mit 80 mg/m² Schmelzklebernanofaser auf Polyurethanbasis beschichtet. Hierzu wurde eine 15 Gew.-%-ige Lösung eines Schmelzklebers auf Polyurethanbasis in Butanon mit Hilfe einer Spritzenapparatur unter Zusatz von 0,02 Gew.-% Kristallviolett in einem elektrischen Feld von 2 kV/cm bei einer Flußrate von 0,3 ml/min zu feinen Fasern versponnen und auf der Polypropylenträgerschicht abgelegt. Der mittlere Durchmesser der Fasern lag dabei bei 350 nm. Anschließend wurde wie in Beispiel 2a) beschrieben eine Polystyrolnanofaserschicht aufgebracht (Figur 2). Das Filterelement wurde im Heißluftstrom bei ca. 95 °C durchströmt unter Ausbildung der Schmelzkleberpunkte (Figur 3).

In dem erfindungsgemäßen Beispiel 2d) wurde auf eine Polypropylenträgerschicht eine Schmelzkleberschicht, dann eine Polystyrolnanofaserschicht, wieder eine Schmelzkleberfaserschicht analog zu Beispiel 2c) und anschließend eine Polyesterträgerfaserschicht aufgebracht. Anschließend wurden die Lagen mit einer temperierten Walze bei ca. 80 °C laminiert.

Um die Filtermedien einer extremen mechanischen Belastung auszusetzen, wurden diese straff gespannt über eine rechtwinkelige Kante gezogen. Die Abscheideleistungen wurden jeweils vor und nach der mechanischen Belastung gemessen. Angegeben ist der Prozentsatz der Teilchen der auf dem Filter abgeschieden wird, bezogen auf das Gesamtanzahl der zur Prüfung verwendeten Partikel.

**Tabelle 2**

| Filtermedium | Abscheideleistung NaCl (NaCl-Partikeldurchmesser 0,3-0,5µm) vor Belastung | Abscheideleistung NaCl (NaCl-Partikeldurchmesser 0,3-0,5µm) nach Belastung |
|---|---|---|
| Polypropylenträgerschicht Vergleichsbeispiel 2a) | 27 % | 27 % |
| Polypropylenträgerschicht + Polystyrolnanofasern Vergleichsbeispiel 2b) | 56 % | 31 % |
| Polypropylenträgerschicht + Schmelzklebernanofasern + Polystyrolnanofasern Erfindungsgemäßes Beispiel 2c) | 63 % | 48 % |
| Polypropylenträgerschicht + Schmelzklebernanofasern + Polystyrolnanofasern + Schmelzklebernanofasern + Polyestervlies Erfindungsgemäßes Beispiel 2d) | 75% | 62% |

Die Tabelle zeigt die Resultate der Messungen der Abscheideleistung als Mittelwert aus fünf Versuchen.

Durch das Aufbringen einer zusätzlichen funktionellen Polystyrolnanofaserschicht auf eine Polypropylenträgerschicht (Vergleichsbeispiel 2b) wurde die Abscheideleistung gegenüber einer reinen Trägerschicht (Vergleichsbeispiels 2a)) deutlich verbessert. Nach der Simulation von mechanischer Belastung konnte beim Vergleich einer Polypropylenträgerschicht/Polystyrolnanofaserschicht (Vergleichsbeispiel 2b) mit einer reinen Polypropylenträgerschicht (Vergleichsbeispiels 2a)) nur eine geringe Verbesserung bei der Abscheideleistung bei der Polypropylenträgerschicht/Polystyrolnanofaserschicht festgestellt werden, was auf die Delamination der Schichten zurückzuführen ist.

Durch das Aufbringen einer zusätzlichen Schmelzklebernanofaserschicht konnte die Abscheideleistung deutlich verbessert werden (erfindungsgemäßes Beispiel 2 c). Insbesondere wiesen Filter mit einer Schmelzklebernanofaserschicht trotz mechanischer Belastung deutlich verbesserte Abscheideleistungen (erfindungsgemäßes Beispiel 2c) auf, verglichen mit Filtern, die ohne Schmelzklebernanofaserschicht hergestellt worden sind (Vergleichsbeispiel 2b).

Das erfindungsgemäße Beispiel 2d) zeigt deutlich, dass die Laminierung von mehr als zwei Schichten in Verbindung mit zusätzlichen Schmelzklebernanofaserschichten die Abscheideleistung sowie die mechanische Stabilität des Filterelements weiter verbessern kann.

## Patentansprüche

1. Filterelement (0), umfassend
eine erste Faserschicht (1/3), eine zweite Faserschicht (1/3) und eine Klebstoffschicht (2), welche die erste mit der zweiten Faserschicht verbindet, wobei die Klebstoffschicht Schmelzkleberfasern mit einem Faserdurchmesser in einem Bereich von 1 nm bis 500 nm umfasst, wobei die Schmelzkleberfasern einen Schmelzpunkt aufweisen, der mindestens 30 °C unter dem Schmelzpunkt der ersten und der zweiten Faserschicht liegt.

2. Filterelement (0), umfassend
eine erste Faserschicht (1/3), eine zweite Faserschicht (1/3) und eine Klebstoffschicht (4), welche die erste mit der zweiten Faserschicht verbindet, wobei die Klebstoffschicht Schmelzkleberpunkte mit einer Größe von 10 bis 800 nm umfasst und die Schmelzkleberpunkte einen Schmelzpunkt aufweisen, der mindestens 30 °C unter dem Schmelzpunkt der ersten und der zweiten Faserschicht liegt.

3. Filterelement (0) nach Anspruch 1,
wobei die Klebstoffschicht (2) Schmelzkleberfasern mit einem Faserdurchmesser in einem Bereich von 100 nm bis 400 nm umfasst.

4. Filterelement (0) nach Anspruch 2,
wobei die Klebstoffschicht (4) aus Schmelzkleberpunkten mit einer Größe von 100 bis 400 nm besteht.

5. Filterelement (0) nach einem der vorhergehenden Ansprüche,
wobei die Klebstoffschicht (2/4) eine Flächengewichtauflage von 0,05 bis 5 g/m² aufweist.

6. Filterelement (0) nach einem der vorhergehenden Ansprüche, wobei
a. die erste und zweite Faserschicht ein Trägermaterial (1) oder
b. die erste Faserschicht ein Trägermaterial (1) und die zweite Faserschicht eine funktionelle Faserschicht (3) ist.

7. Filterelement (0) nach Anspruch 6, wobei die funktionelle Faserschicht (3) Fasern mit einem Durchmesser in einem Bereich von 1 bis 800 nm aufweist und/oder die Trägerschicht (1) Fasern mit einem Durchmesser in einem Bereich von 1 bis 50 µm aufweist.

8. Verfahren zur Herstellung eines Filterelements, umfassend die folgenden Schritte in der angegebenen Reihenfolge:
a) Bereitstellen einer ersten Faserschicht,
b) Aufbringen einer Klebstoffschicht, die Schmelzkleberfasern mit einem Faserdurchmesser in einem Bereich von 1 nm bis 500 nm umfasst, auf die erste Faserschicht aus Schritt a), und
c) Aufbringen einer zweiten Faserschicht auf die Klebstoffschicht nach Schritt b)
wobei die Schmelzkleberfasern einen Schmelzpunkt aufweisen, der mindestens 30 °C unter dem Schmelzpunkt der ersten und der zweiten Faserschicht liegt.

9. Verfahren nach Anspruch 8, wobei nach Schritt c) das Filterelement auf eine Temperatur erwärmt wird, die über dem Schmelzpunkt der Klebstoffschicht aber unter dem Schmelzpunkt der ersten und zweiten Faserschicht liegt unter Ausbildung einer Klebstoffschicht aus Schmelzkleberpunkten mit einer Größe von 10 bis 800 nm.

10. Verfahren nach Anspruch 8 oder 9, wobei
die erste und zweite Faserschicht ein Trägermaterial ist.

11. Verfahren nach Anspruch 8 oder 9, wobei
i) die erste Faserschicht ein Trägermaterial und die zweite Faserschicht eine funktionelle Faserschicht ist oder
ii) die erste Faserschicht eine funktionelle Faserschicht und die zweite Faserschicht ein Trägermaterial ist.

12. Verfahren nach Anspruch 11, wobei die funktionelle Faserschicht Fasern mit einem Durchmesser in einem Bereich von 1 bis 800 nm aufweist und/oder die Trägerschicht Fasern mit einem Durchmesser in einem Bereich von 1 bis 50 µm aufweist.

13. Verfahren nach Anspruch 11 oder 12, wobei
in Schritt a) die erste Faserschicht eine Trägerschicht ist und in Schritt c) die zweite Faserschicht eine funktionelle Faserschicht mit einem hohen Flächengewicht in einem Bereich von 1 g/m² bis 5 g/m² ist.

14. Verfahren nach Anspruch 11 oder 12, wobei
in Schritt a) die erste Faserschicht eine funktionelle Faserschicht mit einem niedrigen Flächengewicht von kleiner als 0,5 g/m², vorzugsweise kleiner als 0,1 g/m², ist und in Schritt c) die zweite Faserschicht eine Trägerschicht ist.

15. Verfahren nach einem der Ansprüche 8 bis 14, wobei das Erwärmen durch Bügeln, beheizte Walzen, beheizte Kontaktplatten, IR-Strahlung und/oder Warmluft erfolgt.

16. Verfahren nach einem der Ansprüche 8 bis 15, wobei die Schmelzkleberfaserschicht durch Elektrospinnen hergestellt wird.

17. Verwendung eines Filterelements nach einem der Ansprüche 1 bis 7 als Kabinenluftfilter, Umluftfilter, Reinraumfilter, Abluftfilter, Wohnraumfilter und/oder Staubsaugerfilter.

## Claims

1. Filter element (0), including
a first fibrous layer (1/3), a second fibrous layer (1/3) and an adhesive layer (2), which connects the first and second fibrous layers together, whereby the adhesive layer includes hot-melt adhesive fibres with a fibre diameter in the region of 1 nm to 500 nm, whereby the hot-melt adhesive fibres comprise a melting point, which lies at least 30°C under the melting point of the first and second fibrous layer.

2. Filter element (0), including
a first fibrous layer (1/3), a second fibrous layer (1/3) and an adhesive layer (4), which connects the first and second fibrous layers together, whereby the adhesive layer includes hot-melt adhesive points with a size of 10 to 800 nm, and the hot-melt adhesive points comprise a melting point, which lies at least 30°C under the melting point of the first and second fibrous layer.

3. Filter element (0) according to claim 1,
whereby the adhesive layer (2) includes hot-melt adhesive fibres with a fibre diameter in the region of 100 nm to 400 nm.

4. Filter element (0) according to claim 2,
whereby the adhesive layer (4) consists of hot-melt adhesive points with a size of 100 to 400 nm.

5. Filter element (0) according to any one of the preceding claims,
whereby the adhesive layer (2/4) comprises a surface weight support of 0.05 to 5g/m².

6. Filter element (0) according to any one of the preceding claims,
whereby
a. the first and second fibrous layer is a supporting material (1), or
b. the first fibrous layer is a supporting material (1) and the second fibrous layer is a functional fibrous layer (3).

7. Filter element (0) according to claim 6, whereby the functional fibrous layer (3) includes fibres with a diameter in the region of 1 to 800 nm, and/or the supporting layer (1) comprises fibres with a diameter in the region of 1 to 50 µm.

8. Method for production of a filter element, including the following stages in the order given:
a) Provision of a first fibrous layer,
b) Application of an adhesive layer, which includes hot-melt adhesive layers with a fibre diameter in the region of 1 nm to 500 nm, onto the first fibrous layer from step a), and
c) Application of a second fibrous layer onto the adhesive layer according to step b).
whereby the hot-melt adhesive fibres comprise a melting point, which lies at least 30°C under the melting point of the first and second fibrous layer.

9. Method according to claim 8, whereby according to step c), the filter element is heated to a temperature, which lies above the melting point of the adhesive layer but below the melting point of the first and second fibrous layer, to form an adhesive layer of hot-melt adhesive points with a size of 10 to 800 nm.

10. Method according to claim 8 or 9, whereby
the first and second layer are a supporting material.

11. Method according to claim 8 or 9, whereby
i) the first fibrous layer is a supporting material and the second fibrous layer is a functional fibrous layer, or
ii) the first fibrous layer is a functional fibrous layer and the second fibrous layer is a supporting material.

12. Method according to claim 11, whereby the functional fibrous layer comprises fibres with a diameter in the region of 1 to 800 nm and/or the supporting layer comprises fibres with a diameter in the region of 1 to 50 µm.

13. Method according to claim 11 or 12, whereby
in step a), the first fibrous layer is a supporting layer and in step c) the second fibrous layer is a functional fibrous layer with a high surface weight in the region of 1g/m² to 5g/m².

14. Method according to claim 11 or 12, whereby
in step a), the first fibrous layer is a functional fibrous layer with a low surface weight of less than 0.5g/m², preferably less than 0.1g.m², and in step c) the second fibrous layer is a supporting layer.

15. Method according to any one of claims 8 to 14, whereby heating takes place by ironing, heated rollers, heated contact plates, IR radiation and/or hot air.

16. Method according to any one of claims 8 to 15, whereby the hot-melt adhesive fibrous layer is produced by electrospinning.

17. Use of a filter element according to any one of claims 1 to 7 as a cabin air filter, circulation filter, cleanroom filter, exhaust air filter, living space filter, and/or vacuum cleaner filter.

## Revendications

1. Élément filtrant (0), comprenant
une première couche de fibres (1/3), une deuxième couche de fibres (113) et une couche de colle (2), laquelle relie la première couche de fibres à la deuxième couche de fibres, la couche de colle comportant des fibres de colle fusible avec un diamètre de fibre dans un intervalle de 1 nm à 500 nm, les fibres de colle fusible présentant un point de fusion qui est situé au moins 30 °C en dessous du point de fusion de la première et de la deuxième couche de fibres.

2. Élément filtrant (0) selon la revendication 1, comprenant
une première couche de fibres (1/3), une deuxième couche de fibres (1/3) et une couche de colle (4), laquelle relie la première couche de fibres à la deuxième couche de fibres, la couche de colle comportant des points de colle fusible d'une taille dans un intervalle de 10 à 800 nm, et les points de colle fusible présentant un point de fusion qui est situé au moins 30 °C en dessous du point de fusion de la première et de la deuxième couche de fibres.

3. Élément filtrant (0) selon la revendication 1,
dans lequel la couche de colle (2) comprend des fibres de colle fusible d'un diamètre de fibre dans un intervalle de 100 nm à 400 nm.

4. Élément filtrant (0) selon la revendication 2,
dans lequel la couche de colle (2) consiste en points de colle fusible d'une taille de 100 nm à 400 nm.

5. Élément filtrant (0) selon l'une quelconque des revendications précédentes,
dans lequel la couche de colle (2/4) présente un poids surfacique de 0,05 à 5 g/m².

6. Élément filtrant (0) selon l'une quelconque des revendications précédentes, dans lequel
a. la première et la deuxième couche de fibres sont un matériau support (1) ou
b. la première couche de fibres est un matériau support (1) et la deuxième couche de fibres est une couche de fibres fonctionnelle (3).

7. Élément filtrant (0) selon la revendication 6, dans lequel la couche de fibres fonctionnelle (3) comporte des fibres d'un diamètre dans un intervalle de 1 à 800 nm et/ou la couche de fibres support (1) comporte des fibres d'un diamètre dans un intervalle de 1 à 50 µm.

8. Procédé de fabrication d'un élément filtrant, comprenant les étapes suivantes dans l'ordre indiqué :
a) mise à disposition d'une première couche de fibres,
b) application d'une couche de colle, qui comprend des fibres de colle fusible d'un diamètre de fibre dans un intervalle de 1 nm à 500 nm sur la première couche de fibres de l'étape a), et
c) application d'une deuxième couche de fibres sur la couche de colle d'après l'étape b),
les fibres de colle fusible présentant un point de fusion qui est de 30 °C en dessous du point de fusion de la première et de la deuxième couche de fibres.

9. Procédé selon la revendication 8, dans lequel, après l'étape c), l'élément filtrant est chauffé à une température qui est au-dessus du point de fusion de la couche de colle mais en dessous du point de fusion de la première et de la deuxième couche de fibres moyennant la formation d'une couche de colle en points de colle fusible d'une taille de 10 à 800 nm.

10. Procédé selon la revendication 8 ou 9, dans lequel
la première et la deuxième couche de fibres sont un matériau support.

11. Procédé selon la revendication 8 ou 9, dans lequel
i) la première couche de fibres est un matériau support et la deuxième couche de fibres est une couche de fibres fonctionnelle ou
ii) la première couche de fibres est une couche de fibres fonctionnelle et la deuxième couche de fibres est un matériau support.

12. Procédé selon la revendication 11, dans lequel la couche de fibres fonctionnelle comporte des fibres d'un diamètre dans un intervalle de 1 à 800 nm et/ou la couche support des fibres d'un diamètre dans un intervalle de 1 à 50 µm.

13. Procédé selon la revendication 11 ou 12, dans lequel
dans l'étape a), la première couche de fibres est une couche support et, dans l'étape c), la deuxième couche de fibres est une couche fonctionnelle avec un poids surfacique élevé dans l'intervalle de 1 g/m² à 5 g/m².

14. Procédé selon la revendication 11 ou 12, dans lequel
dans l'étape a), la première couche de fibres est une couche de fibres fonctionnelle avec un faible poids surfacique inférieur à 0,5 g/m², de préférence inférieur à 0,1 g/m², et dans l'étape c), la deuxième couche de fibres est une couche support.

15. Procédé selon l'une quelconque des revendications 8 à 14, dans lequel le réchauffage s'effectue par repassage, par des rouleaux chauffés, par des plaques de contact chauffées, par un rayonnement 1R et/ou par de l'air chaud.

16. Procédé selon l'une quelconque des revendications 8 à 15, dans lequel la couche de fibres de colle fusible est fabriquée par filage électrostatique.

17. Utilisation d'un élément filtrant selon l'une quelconque des revendications 1 à 7 comme filtre d'air de cabine, filtre d'air ambiant, filtre d'air de salle blanche, filtre d'air sortant, filtre d'air de locaux d'habitation et/ou filtre d'air d'aspirateur.
